# EUROPEAN PATENT SPECIFICATION

(11) **EP 3 340 040 B1**
(45) Date of publication and mention of the grant of the patent: **19.02.2020**
(21) Application number: 17203613.9
(22) Date of filing: 24.11.2017
(51) Int. Cl.: G06F 9/38, G06F 1/32

(54) **DATA PROCESSING SYSTEM AND DATA PROCESSING METHOD**
DATENVERARBEITUNGSSYSTEM UND DATENVERARBEITUNGSVERFAHREN
SYSTÈME DE TRAITEMENT DE DONNÉES ET PROCÉDÉ DE TRAITEMENT DE DONNÉES

(30) Priority: 20.12.2016 JP 2016246557
(43) Date of publication of application: 27.06.2018
(73) Proprietor: Renesas Electronics Corporation, Tokyo 135-0061 (JP)
(72) Inventor: NAKAJIMA, Masami, Tokyo, 135-0061 (JP)
(74) Representative: Betten & Resch

(56) References cited:
- EP-A1- 2 581 833
- US-A- 5 029 073
- US-A1- 2011 213 934
- US-B2- 7 788 469

## Description

### BACKGROUND

The present invention relates to a data processing system and a data processing method and relates to, for example, a data processing system and a data processing method including first and second data processing apparatuses.

In recent years, systems such as Internet of Things (IoT) in which various objects communicate with the Internet or the like have become widespread. A sensing device has been used, for example, not only in a smartphone or a tablet but also in various scenes in daily life such as a watch or an activity meter. Data sensed by the sensing device is transmitted from the sensing device to a smartphone or the like using a communication function such as Bluetooth (registered trademark) and is further processed by a server or cloud on the Internet.

In systems like IoT, edge computing, in which processing is performed nearer to a device than processing in the cloud computing, has been focused on. Accordingly, improvement of performance of the device and a semiconductor device mounted thereon and low power consumption are required. As related art, Literature 1: "Japanese Unexamined Patent Application Publication No. 2004-280378" and Literature 2: "ARM Limited, "big.LITTLE processing", [online], Internet <URL:http://www.arm.com/ja/products/processors/technologies/bi glittleprocessing.php>" are known.

EP 2581 833 A discloses that the snoop controller copies an object to be migrated from the source cache of a CPU to the destination cache of another CPU.

US5029073 discloses other prior art.

### SUMMARY

However, the present inventor has found that, in the techniques such as the aforementioned Literature 1 and the aforementioned Literature 2, when data processing is performed using a plurality of data processing apparatuses (e.g., semiconductor devices) in order to improve performance and to reduce power consumption, it becomes difficult to migrate data processing between the data processing apparatuses.

The above problem is solved by the features of the claims.

The other problems of the related art and the novel characteristics of the present invention will be made apparent from the descriptions of the specification and the accompanying drawings.

According to the present invention, it is possible to easily perform migration of data processing.

### BRIEF DESCRIPTION OF THE DRAWINGS

The above and other aspects, advantages and features will be more apparent from the following description of certain embodiments taken in conjunction with the accompanying drawings, in which:
Fig. 1 is a configuration diagram showing a configuration of a semiconductor device according to a reference example 1;
Fig. 2 is configuration diagram showing a configuration of a data processing system according to a reference example 2;
Fig. 3 is a configuration diagram showing a configuration example of a data processing system according to embodiments;
Fig. 4 is a configuration diagram showing another configuration example of the data processing system according to the embodiments;
Fig. 5 is a configuration diagram showing a configuration example of a sensing system according to a first embodiment;
Fig. 6 is a configuration diagram showing a hardware configuration example of a sensing device according to the first embodiment;
Fig. 7 is a configuration diagram showing a functional configuration example of the sensing device according to the first embodiment;
Fig. 8 is a flowchart showing an operation example of the sensing device according to the first embodiment;
Fig. 9 is an explanatory diagram for describing operations of the sensing device according to the first embodiment;
Fig. 10 is an explanatory diagram for describing operations of the sensing device according to the first embodiment;
Fig. 11 is a configuration diagram showing a functional configuration example of a sensing device according to a second embodiment;
Fig. 12 is a flowchart showing an operation example of the sensing device according to the second embodiment; and
Fig. 13 is an explanatory diagram for describing operations of a sensing device according to a third embodiment.

### DETAILED DESCRIPTION

For the clarification of the description, the following description and the drawings may be omitted or simplified as appropriate. Further, each element shown in the drawings as functional blocks that perform various processing can be formed of a CPU, a memory, and other circuits in hardware and may be implemented by programs loaded in the memory in software. Those skilled in the art will therefore understand that these functional blocks may be implemented in various ways by only hardware, only software, or the combination thereof without any limitation. Throughout the drawings, the same components are denoted by the same reference symbols and overlapping descriptions will be omitted as appropriate.

### (Discussion on how embodiments were achieved)

In high-accuracy sensing applications (e.g., sports sensing), phenomena in the real world need to be grasped in detail. In order to grasp these phenomena, sensing data needs to be sampled at a high rate and sensing needs to be performed with a high accuracy, which increase the amount of data to be handled. Transmitting all these pieces of data to external devices in a limited communication bandwidth and processing all of them in the server or in the cloud cause the real-time performance to be decreased. It is therefore required to increase the performance of a processing apparatus that is installed as close as possible to the part that receives sensing data from the real world, to perform data processing basically in this apparatus, and to transmit only as much data as is necessary to the cloud.

On the other hand, in order to use the sensing application in the aforementioned case, the sensing device needs to have a small size and a light weight so as not to affect operations when it is used. In order to make the sensing device have a small size and a light weight, the battery of the sensing device needs to be small. Further, since the sensing application needs to be used for a long time, it needs to be used by a small-sized battery for a long time. It is therefore important to reduce power consumption in the system.

Therefore, in a semiconductor device that constitutes the sensing device, both a high processing capability and low power consumption need to be achieved.

In response to these needs, the related art such as the aforementioned Literature 1 and the aforementioned Literature 2 have been employed. In these techniques, in order to achieve a high processing capability and low power consumption, a plurality of CPUs (processing apparatuses) whose performance and power consumption different from one another are used in one semiconductor device (semiconductor chip). In the related art, for example, transistors having thresholds different from each other may also be used.

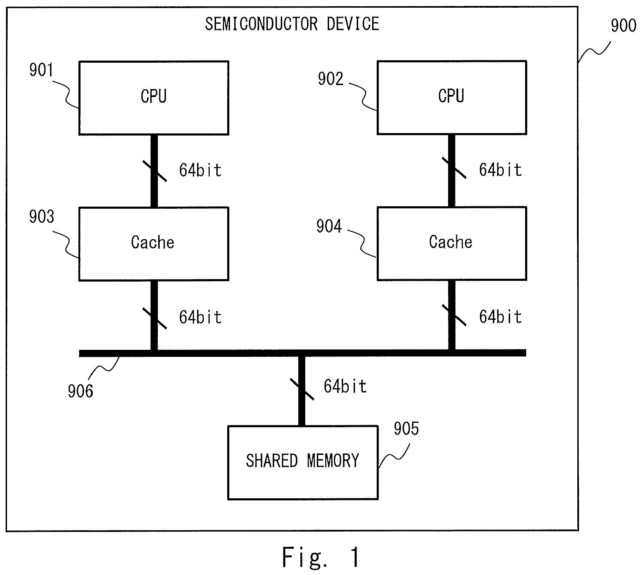

Fig. 1 shows a configuration of a semiconductor device according to a reference example 1 to which the related art is applied. As shown in Fig. 1, a semiconductor device 900 according to the reference example 1 includes CPUs 901 and 902, cache memories 903 and 904, and a shared memory 905. The CPU 901 is connected to the shared memory 905 via the cache memory 903 and an internal bus 906, and the CPU 902 is connected to the shared memory 905 via the cache memory 904 and the internal bus 906. For example, the bit width of the internal bus is 64 bits and high-speed access can be achieved. In the semiconductor device 900 according to the related art, the performance and the power consumption of the CPU 901 are made different from those of the CPU 902 and data processing is executed in an optimal CPU, whereby it is possible to achieve both a high processing capability and low power consumption.

However, since the plurality of CPUs (processing apparatuses) are implemented in one semiconductor device (semiconductor chip) in the semiconductor device 900 according to the reference example 1, the semiconductor device needs to be manufactured by the same semiconductor process technology, which causes a problem that there is a limitation of achieving low power consumption. That is, in order to increase the processing performance, a semiconductor process technology and a transistor with a large leak current need to be used, which increases the power consumption. On the other hand, when a semiconductor process technology and a transistor with a small leak current are used, the processing capability cannot be increased.

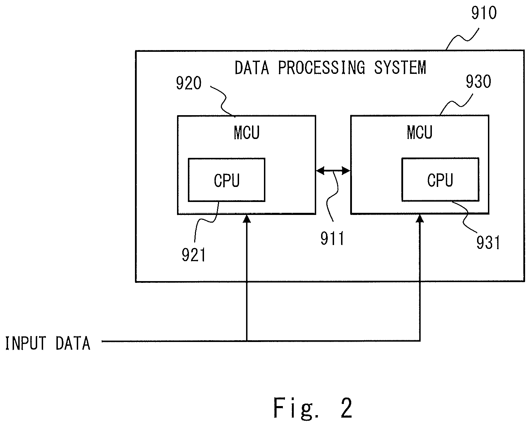

In order to solve the aforementioned problem, for example, a plurality of CPUs (processing apparatuses) are mounted on semiconductor devices different from each other by semiconductor process technologies different from each other may be employed. Fig. 2 shows a configuration of a data processing system according to a reference example 2 to which this implementation is applied. As shown in Fig. 2, a data processing system 910 according to the reference example 2 includes an MCU 920 including a CPU 921 and an MCU 930 including a CPU 931, and the CPU 921 and the CPU 931 are connected to each other via an external bus 911. For example, the CPU 921 has a high processing capability and a high power consumption and the CPU 931 has a low processing capability and a low power consumption.

That is, in the reference example 2, processes different from each other are used. When a high processing capability is required, the CPU 921 (processing apparatus) manufactured by a semiconductor process technology whose leak current is large is used. On the other hand, when there is no need to increase the processing capability, the CPU 931 (processing apparatus) manufactured by a semiconductor process technology whose leak current is small is used to reduce the power consumption, and the power of the CPU 921 (processing apparatus) is interrupted, to thereby further reduce the power consumption.

However, in the implementation as disclosed in the reference example 2, it is difficult to achieve a task cooperation and a task takeover among the plurality of CPUs (processing apparatuses). That is, when a plurality of CPUs (processing apparatuses) are mounted on one semiconductor device as shown in Fig. 1 of the reference example 1, the plurality of CPUs (processing apparatuses) can be connected with one another via an internal bus having a wide bandwidth. In this case, a task cooperation and a task takeover can be easily performed. However, in the reference example 2, the CPUs (processing apparatuses) are implemented on semiconductor devices different from one another. Therefore, it is impossible to connect these CPUs by a bus with a broad bandwidth due to the restriction in the number of IO pins of the semiconductor device. The communication bandwidth between the different semiconductor devices may become 1/100 or less compared to that in the semiconductor device depending on the difference in the bus width and the operation frequency. Therefore, a task cooperation and a task takeover using a narrow communication path need to be executed. As a matter of course, taking time allows task switching (migration) to be performed. This, however, does not achieve the high real-time performance required by the system.

### (Outline of Embodiments)

In order to solve the aforementioned problem, in the following embodiments, a data snooping technique will be employed.

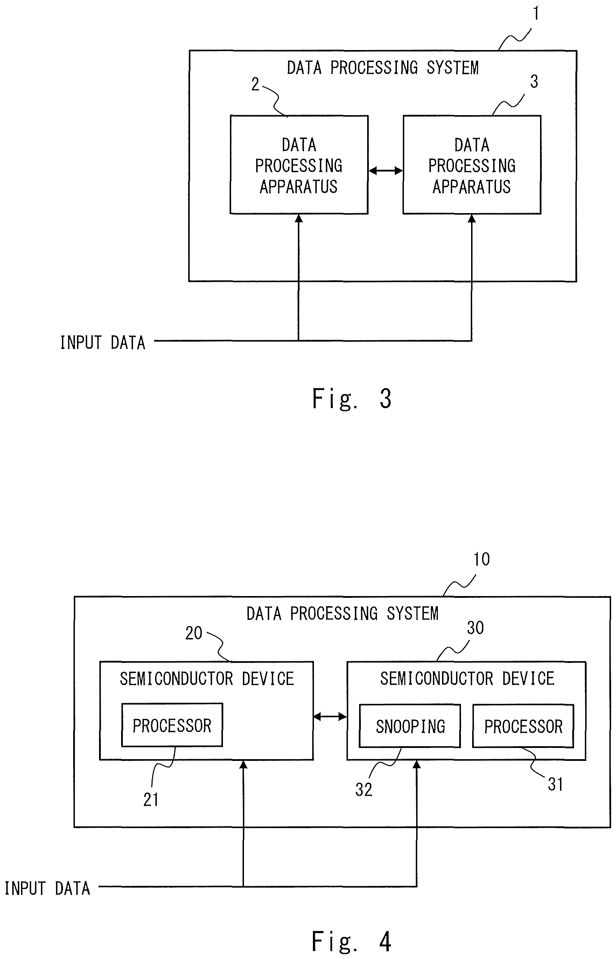

Fig. 3 shows a schematic configuration of a data processing system according to embodiments. As shown in Fig. 3, a data processing system 1 according to this embodiment includes data processing apparatuses 2 and 3. The data processing apparatus (first data processing apparatus, e.g., a semiconductor device such as an MCU) 2 executes processing (first processing, e.g., a task) on input data, and the data processing apparatus (second data processing apparatus) 3 migrates (takes over) the processing on the input data from the data processing apparatus 2 and executes the processing. Further, the main feature of the data processing apparatus 3 is that it snoops the input data input to the data processing apparatus 2 when it migrates the processing from the data processing apparatus 2.

Alternatively, the data processing system according to this embodiment may be constituted by the configuration shown in Fig. 4. In the example shown in Fig. 4, a data processing system 10 includes semiconductor devices 20 and 30. The semiconductor device (first semiconductor device) 20 includes a processor (e.g., CPU) 21 that executes the processing on the input data (first processing). The semiconductor device (second semiconductor device) 30 includes a processor (e.g., CPU) 31 and a snooping unit 32. The snooping unit 32 snoops input data input to the semiconductor device 20, and the processor 31 migrates (takes over) the processing on the input data from the semiconductor device 20 based on the input data snooped by the snooping unit 32 and executes the processing that has been migrated. For example, the semiconductor devices 20 and 30 may be MCUs each including a processor for executing data processing and memories (a volatile memory and a non-volatile memory).

As described above, even in a case in which data processing is executed by data processing apparatuses (semiconductor devices) different from each other, it is possible to easily perform takeover (cooperation) of data processing (task) by snooping, by one data processing apparatus, data of another data processing apparatus. For example, by making the processing capability and the power consumption of one data processing apparatus differ from those of the other data processing apparatus, both a high processing capability and long waiting time can be achieved, whereby the system can be applied to a wide range of applications.

### (First Embodiment)

Hereinafter, with reference to the drawings, a first embodiment will be explained.

### <System Configuration>

As a system according to the first embodiment, a sensing system will be explained here. The sensing system is one example of the system in which a plurality of MCUs (semiconductor devices) are included in a device, and this embodiment may be applied to other systems.

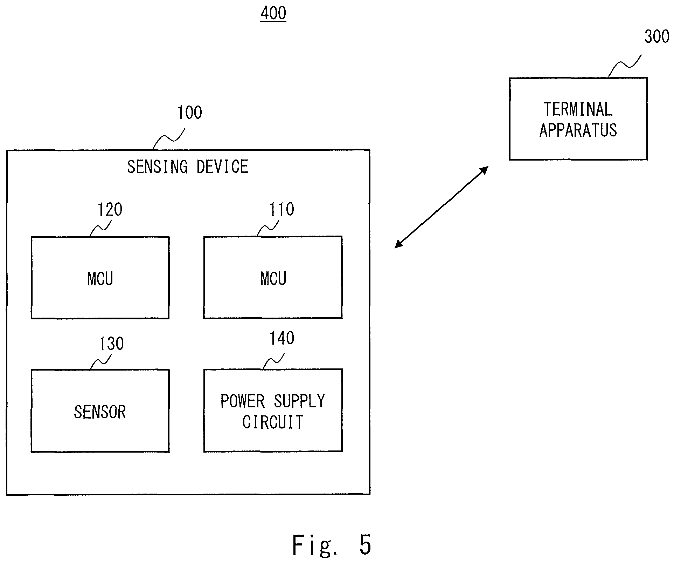

Fig. 5 shows one example of the sensing system according to this embodiment. As shown in Fig. 5, a sensing system 400 according to this embodiment includes a sensing device 100 and a terminal apparatus 300. While the sensing device 100 and the terminal apparatus 300 can communicate with each other by radio using, for example, Bluetooth, they may communicate with each other by radio using another system or may communicate with each other by wire using a desired system.

The sensing device 100 is, for example, a watch such as a smart watch or an activity meter, and is a radio communication apparatus that transmits the sensed data to the terminal apparatus 300 by radio. The sensing device 100 mainly includes MCUs 110 and 120, a sensor 130, and a power supply circuit 140.

The sensor 130 detects information that the sensing device requires, generates sensing data, and outputs the generated data to the MCUs 110 and 120. For example, while the sensor 130 is a sensor that detects acceleration, angular velocity, terrestrial magnetism, the sensor 130 may be another sensor. The sensor 130 may be, for example, a sensor that senses temperature, humidity, air pressure, pulse, pressure, light, sound, smoke, or may be a sensor such as a camera, an infrared light sensor, a keyboard, or a mouse, and the task of the MCU may be migrated in a way described below in accordance with the results of the detection of these desired sensors.

The MCUs (microcomputers) 110 and 120 are data processing apparatuses that process the sensing data generated by the sensor 130. The MCUs 110 and 120 are semiconductor devices each including a CPU (processor) and a memory. Further, one of the MCUs communicates with the terminal apparatus 300. For example, the MCU 110 communicates with the terminal apparatus by radio using Bluetooth. The MCU 110 transmits the sensing data processed by the MCU 110 or the MCU 120 to the terminal apparatus 300.

The power supply circuit 140 is, for example, a chargeable battery and supplies power to the MCU 110 and the MCU 120. The power supply from the power supply circuit 140 is controlled by the control of one MCU and the power of the other MCU is turned on/off.

The terminal apparatus 300 is, for example, a smartphone, a tablet, or a personal computer (PC). The terminal apparatus 300 is a data processing terminal (radio communication apparatus) that receives the sensing data from the sensing device 100 and performs data processing. The terminal apparatus 300 may process the sensing data and further transmit the processed data to the server or the cloud on the Internet.

### <Hardware Configuration of Sensing Device>

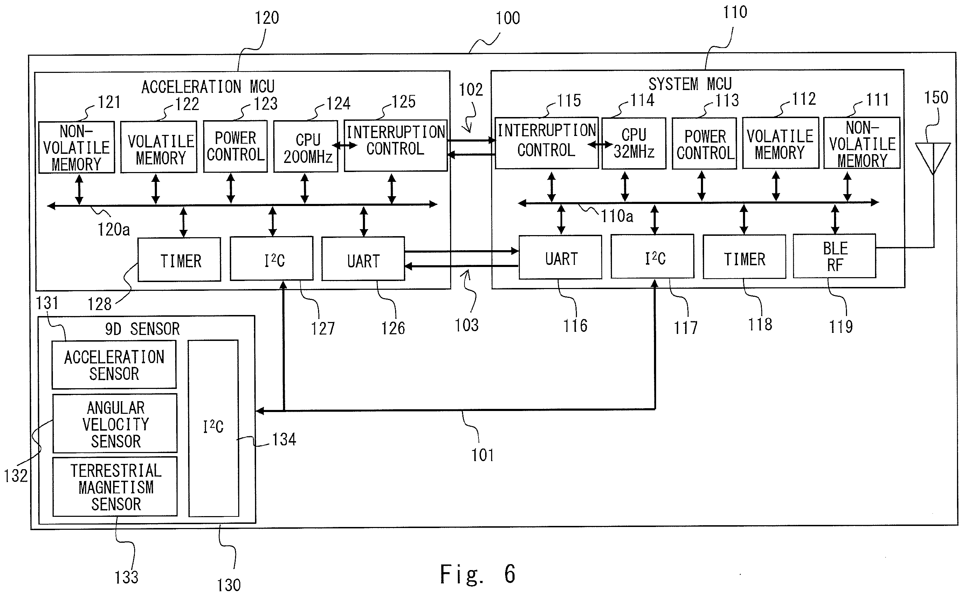

Fig. 6 shows a configuration example of a hardware of the sensing device 100 according to this embodiment shown in Fig. 5.

As shown in Fig. 6, the sensing device 100 according to this embodiment includes an MCU (hereinafter it will be referred to as a system MCU) 110, an MCU (hereinafter it will be referred to as an acceleration MCU) 120, a sensor (hereinafter it will be referred to as a 9D sensor) 130, and a Bluetooth Low Energy (BLE) antenna 150.

While the sensing device includes one system MCU and one acceleration MCU in this embodiment, this configuration is merely one example and the sensing device may include one system MCU and a plurality of acceleration MCUs. When the task is migrated from the system MCU to the acceleration MCU, if it is determined that one acceleration MCU is not enough, the number of acceleration MCUs to be started up may be increased. The method of starting up the plurality of acceleration MCUs is similar to the method of starting up one acceleration MCU described later.

The system MCU (first MCU) 110 is manufactured by the 130nm manufacturing process and the maximum operation frequency (of a CPU 114) is 32 MHz. The current consumed when the system MCU 110 is in a standby mode is 0.20 µA, which is quite small. The acceleration MCU (second MCU) 120 is manufactured by the 40nm manufacturing process and the maximum operation frequency (of a CPU 124) is 200 MHz. That is, due to the differences in the manufacturing process and the operation frequency, the processing capability and the power consumption of the system MCU 110 are lower than those of the acceleration MCU 120 and the processing capability and the power consumption of the acceleration MCU 120 are higher than those of the system MCU 110.

While the performance of the system MCU 110 is different from that of the acceleration MCU 120, they have basically similar configurations and are able to execute the same data processing. For example, the system MCU 110 and the acceleration MCU 120 are MCUs composed of the same instruction set architecture. In this case, the same software can be used, whereby the task migration can be easily performed. The system MCU 110 and the acceleration MCU 120 may be composed of instruction set architectures different from each other. For example, the MCU 110 (the CPU 114) may be a Reduce Instruction Set Computer (RISC) that executes a simple instruction set and the MCU 120 (the CPU 124) may be a Complex Instruction Set Computer (CICS) that executes a complicated instruction set. In this case, both a high processing capability and long waiting time can be efficiently achieved.

The system MCU 110 includes a non-volatile memory 111, a volatile memory 112, a power control circuit (a power management unit) 113, the CPU 114, an interruption control circuit (inter-MCU interruption) 115, a Universal Asynchronous Receiver Transmitter (UART) interface circuit 116, an I²C interface circuit 117, and a timer 118, and the acceleration MCU 120 includes a non-volatile memory 121, a volatile memory 122, a power control circuit (a power management unit) 123, the CPU 124, an interruption control circuit (inter-MCU interruption) 125, a Universal Asynchronous Receiver Transmitter (UART) interface circuit 126, an I²C interface circuit 127, and a timer 128. The system MCU 110 further includes a BLE RF circuit 119. The components in the system MCU 110 are connected to one another via an internal bus 110a and the components in the acceleration MCU 120 are connected to one another via an internal bus 120a.

The volatile memories 112 and 122 store intermediate data and the like for operations executed in the CPUs 114 and 124. Each of the volatile memories 112 and 122 is, for example, a Dynamic Random Access Memory (DRAM) or a Static Random Access Memory (SRAM), and is a memory that loses data stored therein when the power is turned off. Therefore, the volatile memories 112 and 122 cannot hold the intermediate data and the like when the power of the MCU is turned off (or in the standby mode).

The non-volatile memories 111 and 121 store information on instruction codes of programs executed by the CPUs 114 and 124, and various types of data and parameters used by a sensing application program (e.g., trigger and interval of sampling). Each of the non-volatile memories 111 and 121 is, for example, a flash memory and is a memory that keeps data stored therein even after the power is turned off (or in the standby mode). Therefore, the non-volatile memories 111 and 121 are able to hold instruction codes, parameters and the like even after the power of the MCU is being off.

The CPUs 114 and 124 are controllers configured to control operations in the system MCU 110 and the acceleration MCU 120. The CPUs 114 and 124 execute the sensing application (data processing) while storing the intermediate data in the volatile memories 112 and 122 based on the instruction codes, the parameters and the like stored in the non-volatile memories 111 and 121.

The power control circuits 113 and 123 control the power supply from the power supply circuit 140 in accordance with the instructions from the CPUs 114 and 124 and turn on or off the power supply of the system MCU 110 or the acceleration MCU 120. The interruption control circuits 115 and 125 are connected to each other via the interruption bus 102 and control interruption between the CPUs 114 and 124.

The UART interface circuits 116 and 126 are connected to each other via a UART bus 103 and enable data input/output between the MCUs (CPUs). The I²C interface circuits 117 and 127 are connected to the 9D sensor 130 via an I²C bus 101 and enable data input/output between the I²C interface circuits 117 and 127 and the 9D sensor 130.

The timers 118 and 128 operate in accordance with instructions from the CPUs 114 and 124. The timers 118 and 128 count, for example, the interval at which the sensing application acquires the sensing data from the sensor. The BLE RF circuit 119 is connected to the BLE antenna 150 and communicates with the terminal apparatus 300 and the like by radio in accordance with the BLE standard. By using the BLE as the communication system, radio communication can be performed with low power consumption. The data processed by the sensing device 100 is transmitted to the terminal apparatus 300 (PC, smartphone, tablet etc.) via the BLE antenna 150 (the data in the acceleration MCU 120 is transmitted via the system MCU 110) and these data are further processed by the terminal apparatus 300.

The 9D sensor 130 includes an acceleration sensor 131, an angular velocity sensor 132, a terrestrial magnetism sensor 133, and an I²C interface circuit 134. The acceleration sensor 131, the angular velocity sensor 132, and the terrestrial magnetism sensor 133 respectively detect the acceleration, the angular velocity, and the terrestrial magnetism with respect to the three-axis (XYZ-axis) directions. Therefore, the sensing data of the 9D sensor 130 includes nine kinds of data including the acceleration data for the three axes, the angular velocity data for the three axes, and the terrestrial magnetism data for the three axes. While the acceleration sensor 131, the angular velocity sensor 132, and the terrestrial magnetism sensor 133 are, for example, digital sensors configured to output digital signals as sensing data, they may be analog sensors configured to output analog signals. The I²C interface circuit 134 is connected to both the system MCU 110 and the acceleration MCU 120 via the I²C bus 101. The I²C interface circuit 134 outputs the sensing data of one or all of the acceleration sensor 131, the angular velocity sensor 132, and the terrestrial magnetism sensor 133 to the I²C bus 101 in accordance with a request from the system MCU 110 or the acceleration MCU 120.

### <Functional block Configuration of MCU>

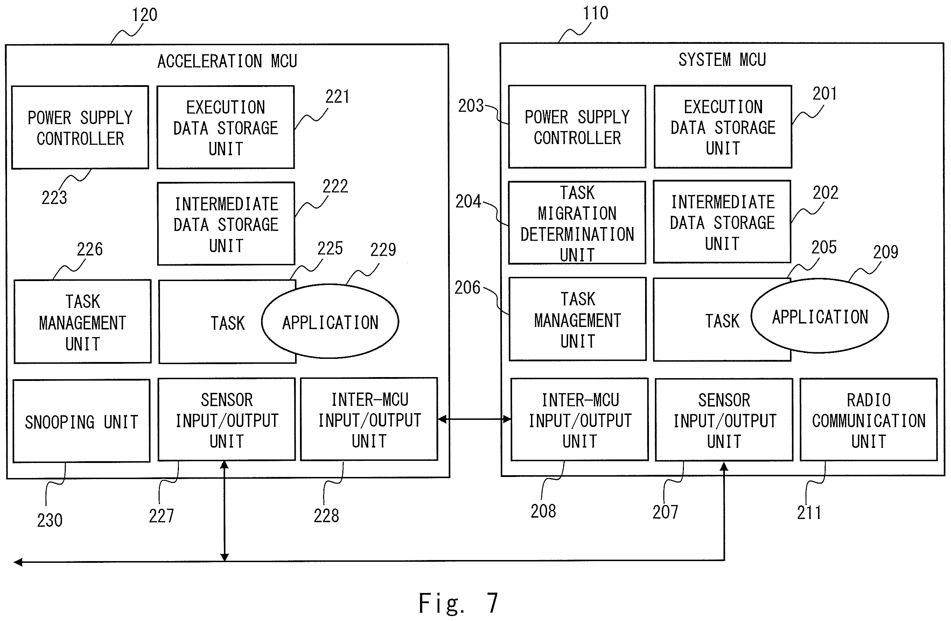

Fig. 7 shows a configuration example of functional blocks of the system MCU 110 and the acceleration MCU 120 according to this embodiment shown in Fig. 6. These blocks may be achieved by the hardware shown in Fig. 6 or may be achieved by executing software by hardware. Fig. 7 is one example of the functional blocks for achieving this embodiment and may be formed of other functional blocks as long as the following operations can be performed.

As shown in Fig. 7, the system MCU 110 includes an execution data storage unit 201, an intermediate data storage unit 202, a power supply controller 203, a task 205, a task management unit 206, a sensor input/output unit 207, and an inter-MCU input/output unit 208, and the acceleration MCU 120 includes an execution data storage unit 221, an intermediate data storage unit 222, a power supply controller 223, a task 225, a task management unit 226, a sensor input/output unit 227, and an inter-MCU input/output unit 228. The system MCU 110 further includes a task migration determination unit 204 and a radio communication unit 211. The acceleration MCU 120 further includes a snooping unit 230.

The execution data storage units 201 and 221 are storage units that store instruction codes, parameters and the like that are execution data necessary for execution of data processing and correspond to, for example, non-volatile memories 111 and 121. The intermediate data storage units 202 and 222 are storage units that store the intermediate data to be used in operations of an application and correspond to, for example, volatile memories 112 and 122.

The tasks 205 and 225 are processing units that execute the applications (sensing application programs) 209 and 229, respectively, and are achieved, for example, by the CPUs 114 and 124 executing the program. While the example in which the sensing application is executed is explained in this embodiment, another application in which two MCUs process the input data and the processed data is output may be employed. Further, while the unit of the data processing by the application is described as a task in this embodiment, data processing may be instead executed by units of processes and threads. The task management units 206 and 226 are management units (controllers) that control execution and migration of the tasks 205 and 225 and are achieved, for example, by the CPUs 114 and 124 executing the program. The task management unit 206 of the system MCU 110 controls the migration of the task 205 in accordance with the result of the determination in the task migration determination unit 204.

The sensor input/output units 207 and 227 are input/output units that receive or output sensing data from or to the 9D sensor 130 and correspond to, for example, the I²C interface circuits 117 and 127. The inter-MCU input/output units 208 and 228 are input/output units that exchange data between the MCUs and correspond to, for example, the UART interface circuits 116 and 126.

The task migration determination unit 204 is a determination unit that determines whether to perform task migration between MCUs, and is achieved by the CPUs 114 and 124 executing the program. In this embodiment, the task migration from the system MCU 110 to the acceleration MCU 120 is determined. The radio communication unit 211 is a communication unit that transmits the results of processing the task 205 and the task 225 to the terminal apparatus 300 by radio and corresponds to, for example, the BLE RF circuit 119.

The snooping unit 230 snoops the sensing data output from the 9D sensor 130 to the system MCU 110 at the time of task migration. This snooping is achieved, for example, by the CPU 124 executing the program.

### <Task Migration Operation >

In the sensing application, the waiting time is longer than the operation time. Therefore, in the standby mode or when the load of the CPU is light, the power of the acceleration MCU 120 is turned off and the operation is performed only in the system MCU 110, to thereby reduce the power consumption. On the other hand, when the heavy load processing by the CPU is required, the power of the acceleration MCU 120 is turned on and the processing is migrated from the system MCU 110 to the acceleration MCU.

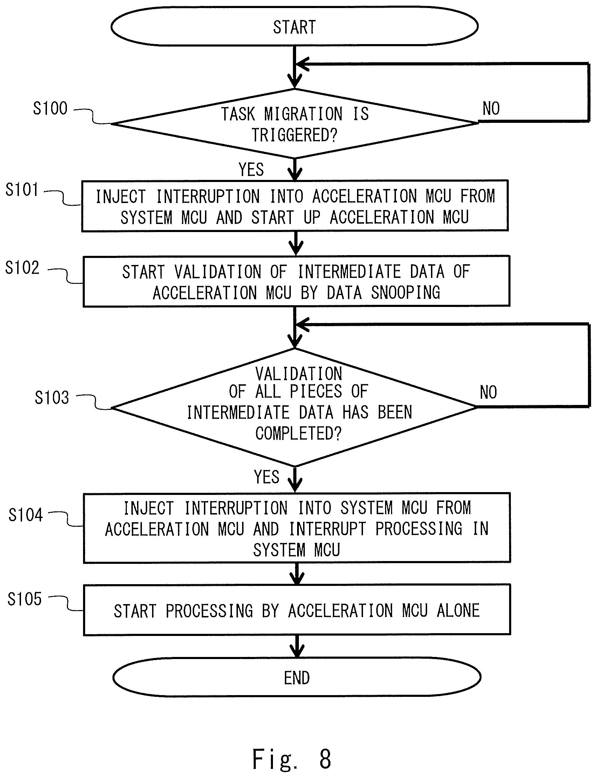

Fig. 8 is a flowchart showing the task migration operation from the system MCU 110 to the acceleration MCU 120.

In this embodiment, the system MCU 110 leads the task migration. Therefore, the system MCU 110 (e.g., the task migration determination unit 204) first determines whether the task migration is triggered by any factor (S100). The trigger for the task migration may be determined by the sensing application. For example, the input data may be periodically acquired from the 9D sensor 130 and the task migration may be triggered when it is recognized, based on the input data (acceleration data etc.) that has been acquired, that the sensing device 100 has made a transition from a stationary state to a moving state, or it is recognized that the sensing device 100 has made a transition from a low-speed movement to a high-speed movement and it is determined that the sampling rate needs to be increased (sampling rate higher than a predetermined sampling rate).

The task migration may be triggered by other conditions. The task migration may be triggered by, for example, an increase in the number of sensors to be used. Specifically, when the application determines that the state has been changed from the state in which only the acceleration sensor 131 is used to a state in which all of the acceleration sensor 131, the angular velocity sensor 132, and the terrestrial magnetism sensor 133 are used, the task is migrated from the system MCU 110 to the acceleration MCU 120. Further, the task migration may be triggered by the workload (load) of the CPU. Specifically, the workload of the CPU 114 of the system MCU 110 may be periodically measured, and the task may be migrated from the system MCU 110 to the acceleration MCU 120 when the workload reaches a predetermined level (e.g., 80%) or larger. Further, a temperature sensor may be included and the task migration may be triggered by an input from the temperature sensor. Specifically, the temperature sensor may periodically measure the temperature of the system MCU 110 and the task may be migrated from the system MCU 110 to the acceleration MCU 120 when the temperature thereof reaches a predetermined level (e.g., 30°C) or higher. That is, it is determined that the task should be migrated when, for example, the processing capability needs to be increased. It is therefore possible to perform processing at a high performance in accordance with processing and the like.

When the task migration is not triggered by any factor (the migration condition is not satisfied), the system MCU 110 repeats the determination of the trigger for the task migration. On the other hand, when the task migration is triggered by any factor (the migration condition is satisfied), the system MCU 110 (e.g., the task management unit 206) injects an interruption into the acceleration MCU 120 to start up the acceleration MCU 120 (S101). Then the acceleration MCU 120 (e.g., the snooping unit 230) snoops the sensing data to be input to the system MCU 110 and starts validation of the intermediate data of the acceleration MCU 120 (the intermediate data storage unit 222) (S102).

Next, the acceleration MCU 120 (e.g., the task management unit 226) determines whether the validation of all the pieces of intermediate data has been completed as the result of the snooping (S103). When the validation of all the pieces of intermediate data has not been completed, the acceleration MCU 120 continues snooping until the time when the validation of all the pieces of intermediate data is completed.

When the validation of all the pieces of intermediate data is completed, the acceleration MCU 120 (e.g., the task management unit 226) injects an interruption into the system MCU 110 and the system MCU 110 (e.g., the task management unit 206) interrupts the processing (the task 205) that has been executed (S104). Further, the acceleration MCU 120 starts processing (the task 225) by itself alone (S105).

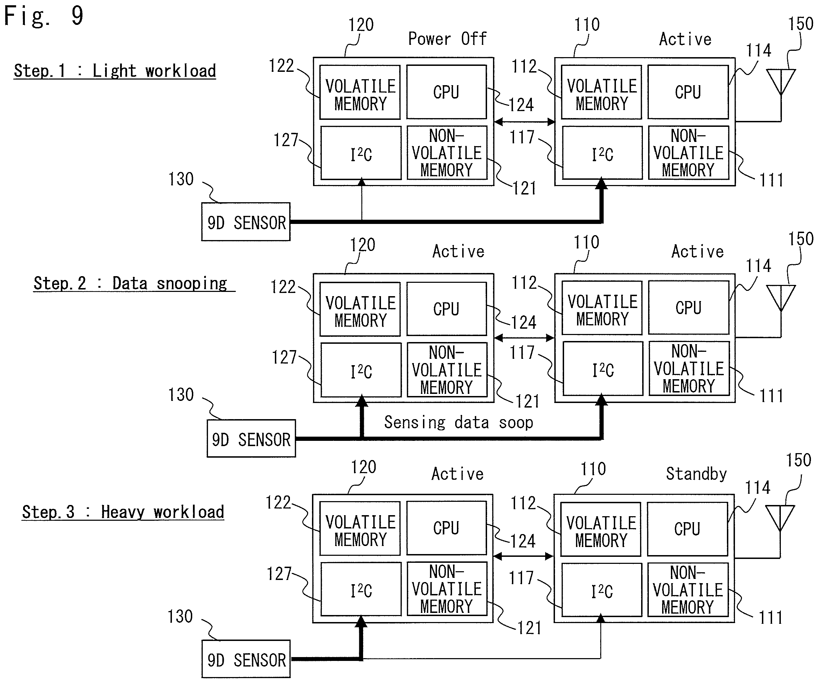

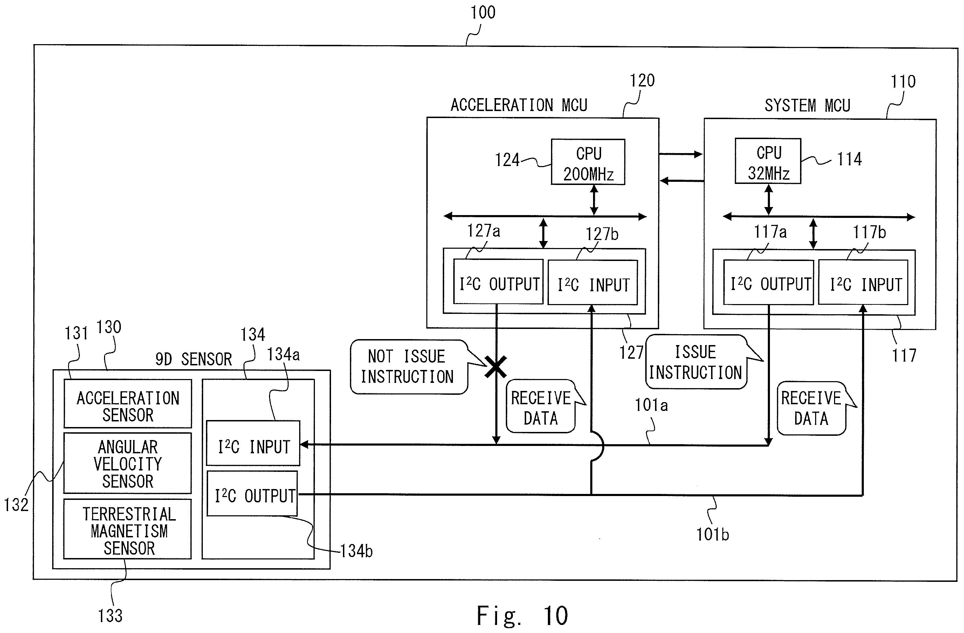

Fig. 9 schematically shows a task migration operation from the system MCU 110 to the acceleration MCU 120 and Fig. 10 shows a data snooping operation at the time of task migration.

In Fig. 9, in Step 1, the load is light. Therefore, the power supply of the acceleration MCU 120 is off and the system MCU 110 is in the active state. Then when the system MCU 110 determines that the task should be migrated, the system MCU 110 injects an interruption into the acceleration MCU 120 to start the acceleration MCU 120.

The intermediate data and cache data that should be held in the volatile memory (SRAM) 122 are invalid immediately after the acceleration MCU 120 is started up. Therefore, it is impossible to take over processing of the system MCU 110. Therefore, in Step 2, data snooping is performed in order to take over processing from the system MCU 110 to the acceleration MCU 120.

For example, as shown in Fig. 10, the system MCU 110 and the acceleration MCU 120 are connected to the 9D sensor 130 via an I²C control line 101a and an I²C data line 101b. Of the two MCUs connected to the I²C bus, only the system MCU 110 issues an instruction to the I²C control line 101a while the acceleration MCU 120 does not issue any instruction. Then the 9D sensor 130 outputs the sensing data to the I²C data line 101b. The system MCU 110 issues instructions at the interval in accordance with the sampling rate and the 9D sensor 130 outputs the sensing data at this interval. The sensing data on the I²C data line 101b output at this interval is received by the system MCU 110 and is also received (snooped) by the acceleration MCU 120. That is, the acceleration MCU 120 monitors the I²C data line 101b at the interval in accordance with the sampling rate the same as that in the system MCU 110, to acquire the sampling data the same as that which the system MCU 110 has acquired. In this snooping, after the startup of the acceleration MCU 120, the data processing is continued in the system MCU 110 for a couple of sampling operations. Meanwhile, the acceleration MCU 120 snoops the sensing data and performs data processing the same as that performed in the system MCU 110, to thereby validate the intermediate data.

When the acceleration MCU 120 determines that all the pieces of intermediate data have become valid by this snooping, as shown in Step 3 in Fig. 9, the acceleration MCU 120 injects an interruption into the system MCU 110, to thereby interrupt the processing in the system MCU 110 and start processing only in the acceleration MCU 120. When the processing in the system MCU 110 is not necessary, the system MCU 110 may be switched to a standby mode.

### <Effects of This Embodiment>

As described above, according to this embodiment, it is possible to validate the intermediate data of the acceleration MCU without interrupting the processing in the system MCU. It is therefore possible to achieve smooth (unceasing and continuous) takeover of processing.

Further, by applying the data snooping technique to the sensing application, the task migration can be completed in a predetermined period. The features of the sensing application are as follows.
(1) The data flows in one direction. Specifically, the data input from the sensor is processed by the MCU. The result of the processing is output to an external device using a communication function. Therefore, by snooping only the read data from the sensor, the intermediate data in the MCU can be validated.
(2) It is possible to validate the intermediate data by a limited number of times of periodic snooping. Specifically, in the case of the filter processing used in the sensing application, the data is set by performing sampling a couple of times. Therefore, it is possible to complete task migration using a small amount of data, that is, in a short migration time.

As described above, in this embodiment, a feature of the sensing application, that is, the sensing application enables generation of the intermediate data by acquiring the sensing data a couple of times, is used, whereby it is possible to perform task takeover by snooping the sensing data a couple of times even in a small data bandwidth.

### (Second Embodiment)

Hereinafter, with reference to the drawings, a second embodiment will be explained. While the example in which the task migration from the system MCU to the acceleration MCU is performed has been described in the first embodiment, an example in which the task migration from the acceleration MCU to the system MCU is performed will be explained in the second embodiment. Note that the hardware configuration of the sensing device according to this embodiment is similar to that in the first embodiment.

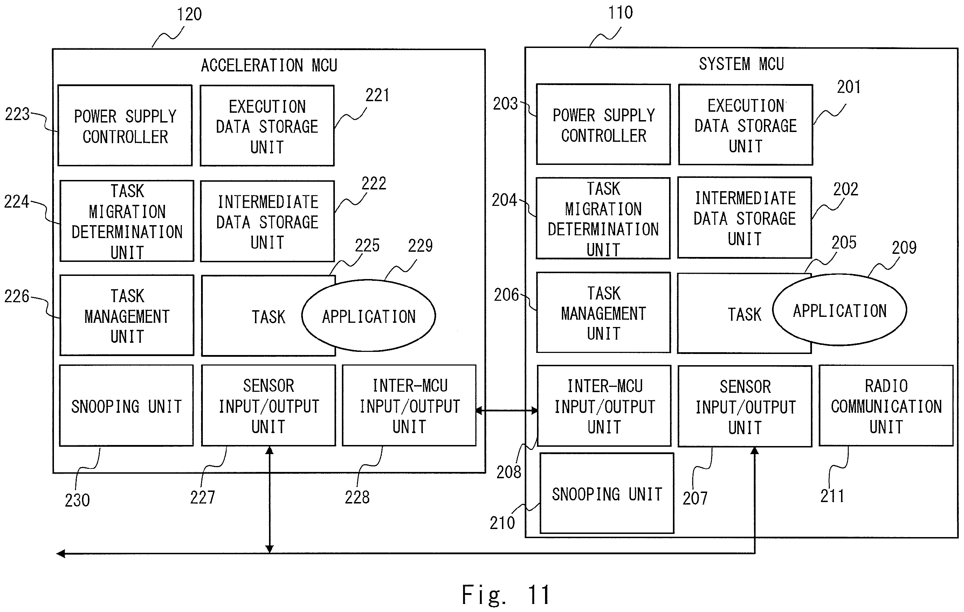

Fig. 11 shows a configuration example of functional blocks of the system MCU 110 and the acceleration MCU 120 according to this embodiment. In this embodiment, the system MCU 110 includes, besides the configurations of the first embodiment, a snooping unit 210 and the acceleration MCU 120 includes, besides the configurations of the first embodiment, a task migration determination unit 224.

That is, in this embodiment, in order to achieve the task migration from the acceleration MCU 120 to the system MCU 110, the task migration determination unit 224 of the acceleration MCU 120 determines whether to perform the task migration between MCUs, similar to the task migration determination unit 204 of the system MCU 110. Further, the snooping unit 210 of the system MCU 110 snoops the sensing data output from the 9D sensor 130 to the acceleration MCU 120 at the time of task migration, similar to the snooping unit 230 of the acceleration MCU 120.

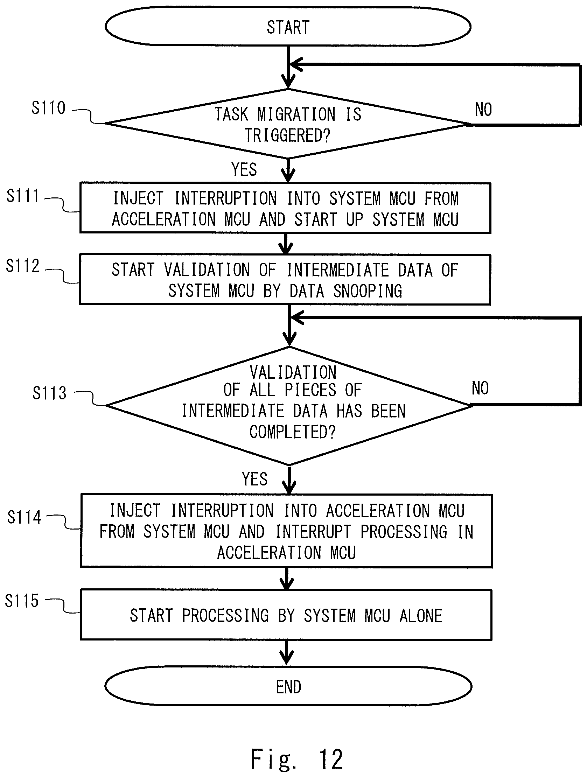

Fig. 12 is a flowchart showing the task migration operation from the acceleration MCU 120 to the system MCU 110.

In this embodiment, the acceleration MCU 120 leads the task migration. First, the acceleration MCU 120 determines whether the task migration is triggered by any factor (S110). The trigger for the task migration may be determined by the application, similar to the first embodiment. Specifically, the task migration may be triggered when it is recognized, from information input from the 9D sensor 130, that the sensing device 100 has made a transition from a moving state to a stationary state, or it is recognized that the sensing device 100 has made a transition from a high-speed movement to a low-speed movement and it is determined that the sampling rate can be reduced (a sampling rate lower than a predetermined sampling rate) and the power consumption can be reduced, for example. Further, similar to the first embodiment, the task migration may be triggered by a decrease in the number of sensors to be used or by a decrease in the workload of the CPU. That is, it is determined that the task should be migrated when, for example, processing in low power consumption (low processing capability) can be performed. It is therefore possible to perform processing with low power consumption in accordance with the processing and the like.

When the acceleration MCU 120 determines the task migration, the acceleration MCU 120 injects an interruption into the system MCU 110 to start the system MCU 110 (Sill). Then, similar to the first embodiment, in order to take over processing from the acceleration MCU 120 to the system MCU 110, the system MCU 110 snoops the data of the acceleration MCU 120 and starts validation of the intermediate data of the system MCU 110 (S112).

Next, when the system MCU 110 determines that all the pieces of intermediate data have become valid, the system MCU 110 injects an interruption into the acceleration MCU 120 to interrupt processing in the acceleration MCU 120 (S114). Further, the system MCU 110 turns off the acceleration MCU 120 and starts processing only in the system MCU 110 (S115).

As described above, even in the case in which the task migration method according to the first embodiment is applied to the task migration from the acceleration MCU to the system MCU, the task migration can be performed easily in a way similar to that in the first embodiment. Further, when the processing is performed in the acceleration MCU, the task may be migrated to the system MCU in accordance with the situation and the power of the acceleration MCU may be turned off, whereby it is possible to reduce the power consumption.

### (Third Embodiment)

Hereinafter, with reference to the drawings, a third embodiment will be explained. In the aforementioned first embodiment, the case in which one task that is being operated in the system MCU is migrated to the acceleration MCU has been described. Meanwhile, in this embodiment, an example in which one of the two tasks that are being operated in the system MCU is migrated to the acceleration MCU will be explained. This embodiment can be applied also to the case in which the task is migrated from the acceleration MCU to the system MCU as described in the second embodiment.

The hardware configuration, the functional block configuration, and the basic task migration operation are similar to those in the first embodiment. That is, the operation regarding the task which is to be migrated is the same as that in the first embodiment. On the other hand, the task which is not to be migrated is not migrated, and this task is kept to be operated on the system MCU.

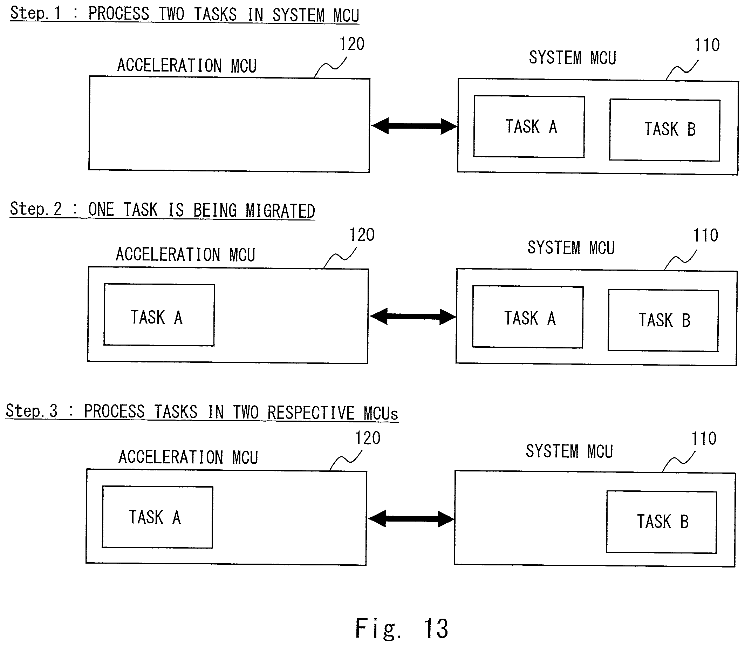

Fig. 13 shows one example of the task migration operation according to this embodiment. In Fig. 13, before the task migration in Step 1, two tasks A and B are executed in the system MCU 110. Next, when the task is migrated in Step 2, only the task A is migrated from the system MCU 110 to the acceleration MCU 120. For example, as the trigger for the task migration, it is determined whether to migrate some of the tasks based on the load. Next, after the completion of the task migration in Step 3, the acceleration MCU 120 executes only the task A and the system MCU 110 executes only the task B.

As described above, by migrating some of the tasks (processing) at the time of task migration, only the necessary task can be migrated in accordance with the performance of the MCU and the processing of the task, to thereby able to optimally perform the task migration.

The program(s) (application(s)) described above can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). The program(s) may be provided to a computer using any type of transitory computer readable media. Examples of transitory computer readable media include electric signals, optical signals, and electromagnetic waves. Transitory computer readable media can provide the program to a computer via a wired communication line (e.g., electric wires, and optical fibers) or a wireless communication line.

While the invention made by the present inventors has been specifically described above based on the embodiments, it is needless to say that the present invention is not limited to the embodiments already stated above and may be changed in various ways without departing from the spirit of the present invention.

The first to third embodiments can be combined as desirable by one of ordinary skill in the art.

While the invention has been described in terms of several embodiments, those skilled in the art will recognize that the invention can be practiced with various modifications within the scope of the appended claims and the invention is not limited to the examples described above.

Further, the scope of the claims is not limited by the embodiments described above.

## Claims

1. A data processing system comprising:
a first data processing apparatus (110) configured to execute first processing on input data acquired from a data line (101b) at an interval in accordance with a sampling rate; and
a second data processing apparatus (120) configured to migrate the first processing from the first data processing apparatus (110) and execute the first processing, wherein
the second data processing apparatus (120) is adapted to migrate the first processing by snooping the input data input to the first data processing apparatus (110), and when snooping, the second data processing apparatus (120) is adapted to monitor the data line (101b) at the interval in accordance with the sampling rate, to acquire the input data that is the same as that which the first data processing apparatus (110) has acquired.

2. The data processing system according to Claim 1, wherein the processing capability and the power consumption of the first data processing apparatus (110) are different from those of the second data processing apparatus (120).

3. The data processing system according to Claim 2, wherein
the processing capability and the power consumption of the second data processing apparatus (120) are higher than those of the first data processing apparatus (110), and
when a processing capability higher than that of the first data processing apparatus (110) is required, the second data processing apparatus (120) is configured to migrate the first processing.

4. The data processing system according to Claim 3, wherein
when a sampling rate higher than a predetermined sampling rate is required based on the input data, the second data processing apparatus (120) is configured to migrate the first processing.

5. The data processing system according to Claim 3, wherein, when the number of pieces of input data that the first processing requires has increased, the second data processing apparatus (120) is configured to migrate the first processing.

6. The data processing system according to Claim 3, wherein, when the load of the first data processing apparatus (110) has increased, the second data processing apparatus (120) is configured to migrate the first processing.

7. The data processing system according to Claim 2, wherein
the processing capability and the power consumption of the second data processing apparatus (120) are lower than those of the first data processing apparatus (110), and
when processing can be performed with power consumption lower than that of the first data processing apparatus (110), the second data processing apparatus (120) is configured to migrate the first processing.

8. The data processing system according to Claim 7, wherein
when the processing can be performed at a sampling rate lower than a predetermined sampling rate based on the input data, the second data processing apparatus (120) is configured to migrate the first processing.

9. The data processing system according to Claim 7, wherein, when the number of pieces of input data that the first processing requires has been reduced, the second data processing apparatus (120) is configured to migrate the first processing.

10. The data processing system according to Claim 7, wherein, when the load of the first data processing apparatus (110) is reduced, the second data processing apparatus (120) is configured to migrate the first processing.

11. The data processing system according to Claim 1, wherein
the first data processing apparatus (110) is configured to execute a plurality of the first processings, and
the second data processing apparatus (120) is configured to migrate processing selected from among the plurality of first processings from the first data processing apparatus (110).

12. The data processing system according to Claim 1, wherein the input data is configured to sense data input from a sensor (130).

13. The data processing system according to Claim 12, wherein
the first and second data processing apparatuses (110, 120) are both connected with the sensor (130), and
the second data processing apparatus (120) is configured to snoop sensing data that the first data processing apparatus (110) acquires from the sensor (130).

14. The data processing system according to Claim 1 comprising a first semiconductor device as the first data processing apparatus (110) and a second semiconductor device as the second data processing apparatus (120), wherein
the first semiconductor device comprises a first processing unit configured to execute the first processing, and
the second semiconductor device is adapted to migrate the first processing and comprises:
a snooping unit (230) configured to snoop the input data input to the first semiconductor device, and
a second processing unit configured to execute the first processing.

15. A data processing method in a data processing system comprising a first data processing apparatus (110) and a second data processing apparatus (120), wherein
the first data processing apparatus (110) executes first processing on input data acquired from a data line (101b) at an interval in accordance with a sampling rate, and
the second data processing apparatus (120) migrates the first processing by snooping the input data input to the first data processing apparatus (110), and executes the first processing, wherein when snooping, the second data processing apparatus (120) monitors the data line (101b) at the interval in accordance with the sampling rate, to acquire the input data that is the same as that which the first data processing apparatus (110) has acquired.

## Patentansprüche

1. Datenverarbeitungssystem, umfassend:
eine erste Datenverarbeitungsvorrichtung (110), die konfiguriert ist, um eine erste Verarbeitung an von einer Datenleitung (101b) erlangten Eingangsdaten in einem Intervall gemäß einer Abtastrate auszuführen; und
eine zweite Datenverarbeitungsvorrichtung (120), die konfiguriert ist, um die erste Verarbeitung von der ersten Datenverarbeitungsvorrichtung (110) zu migrieren und die erste Verarbeitung auszuführen, wobei
die zweite Datenverarbeitungsvorrichtung (120) dazu geeignet ist, die erste Verarbeitung durch Snooping der zur ersten Datenverarbeitungsvorrichtung (110) eingegebenen Eingangsdaten zu migrieren, und,
die zweite Datenverarbeitungsvorrichtung (120), beim Snooping, dazu geeignet ist, die Datenleitung (101b) in einem Intervall gemäß der Abtastrate zu überwachen, um die Eingangsdaten zu erlangen, die dieselben wie diejenigen sind, die die erste Datenverarbeitungsvorrichtung (110) erlangt hat.

2. Datenverarbeitungssystem nach Anspruch 1, wobei die Verarbeitungsfähigkeit und der Energieverbrauch der ersten Datenverarbeitungsvorrichtung (110) unterschiedlich von denjenigen der zweiten Datenverarbeitungsvorrichtung (120) sind.

3. Datenverarbeitungssystem nach Anspruch 2, wobei
die Verarbeitungsfähigkeit und der Energieverbrauch der zweiten Datenverarbeitungsvorrichtung (120) höher als diejenigen der ersten Datenverarbeitungsvorrichtung (110) sind, und
wenn eine Verarbeitungsfähigkeit erforderlich ist, die höher als diejenige der ersten Datenverarbeitungsvorrichtung (110) ist, die zweite Datenverarbeitungsvorrichtung (120) konfiguriert ist, um die erste Verarbeitung zu migrieren.

4. Datenverarbeitungssystem nach Anspruch 3, wobei
wenn eine Abtastrate, die höher als eine vorbestimmte Abtastrate ist, basierend auf den Eingangsdaten erforderlich ist, die zweite Datenverarbeitungsvorrichtung (120) konfiguriert ist, um die erste Verarbeitung zu migrieren.

5. Datenverarbeitungssystem nach Anspruch 3, wobei, wenn sich die Anzahl von Stücken von Eingangsdaten, die die erste Verarbeitung erfordern, erhöht hat, die zweite Datenverarbeitungsvorrichtung (120) konfiguriert ist, um die erste Verarbeitung zu migrieren.

6. Datenverarbeitungssystem nach Anspruch 3, wobei, wenn sich die Last der ersten Datenverarbeitungsvorrichtung (110) erhöht hat, die zweite Datenverarbeitungsvorrichtung (120) konfiguriert ist, um die erste Verarbeitung zu migrieren.

7. Datenverarbeitungssystem nach Anspruch 2, wobei
die Verarbeitungsfähigkeit und der Energieverbrauch der zweiten Datenverarbeitungsvorrichtung (120) niedriger als diejenigen der ersten Datenverarbeitungsvorrichtung (110) sind, und
wenn eine Verarbeitung mit einem Energieverbrauch durchgeführt werden kann, der niedriger als derjenige der ersten Datenverarbeitungsvorrichtung (110) ist, die zweite Datenverarbeitungsvorrichtung (120) konfiguriert ist, um die erste Verarbeitung zu migrieren.

8. Datenverarbeitungssystem nach Anspruch 7, wobei
wenn die Verarbeitung bei einer Abtastrate durchgeführt werden kann, die niedriger als eine vorbestimmte Abtastrate basierend auf den Eingangsdaten ist, die zweite Datenverarbeitungsvorrichtung (120) konfiguriert ist, um die erste Verarbeitung zu migrieren.

9. Datenverarbeitungssystem nach Anspruch 7, wobei, wenn die Anzahl von Stücken von Eingangsdaten, die die erste Verarbeitung erfordern, reduziert worden ist, die zweite Datenverarbeitungsvorrichtung (120) konfiguriert ist, um die erste Verarbeitung zu migrieren.

10. Datenverarbeitungssystem nach Anspruch 7, wobei, wenn die Last der ersten Datenverarbeitungsvorrichtung (110) reduziert ist, die zweite Datenverarbeitungsvorrichtung (120) konfiguriert ist, um die erste Verarbeitung zu migrieren.

11. Datenverarbeitungssystem nach Anspruch 1, wobei
die erste Datenverarbeitungsvorrichtung (110) konfiguriert ist, um eine Vielzahl der ersten Verarbeitungen auszuführen, und
die zweite Datenverarbeitungsvorrichtung (120) konfiguriert ist, um eine unter der Vielzahl von ersten Verarbeitungen von der ersten Datenverarbeitungsvorrichtung (110) ausgewählte Verarbeitung zu migrieren.

12. Datenverarbeitungssystem nach Anspruch 1, wobei die Eingangsdaten konfiguriert sind, um von einem Sensor (130) eingegebene Daten zu erfassen.

13. Datenverarbeitungssystem nach Anspruch 12, wobei
die erste und die zweite Datenverarbeitungsvorrichtung (110, 120) beide mit dem Sensor (130) verbunden sind, und
die zweite Datenverarbeitungsvorrichtung (120) konfiguriert ist, um Erfassungsdaten einem Snooping zu unterziehen, die die erste Datenverarbeitungsvorrichtung (110) vom Sensor (130) erlangt.

14. Datenverarbeitungssystem nach Anspruch 1, das eine erste Halbleitervorrichtung als die erste Datenverarbeitungsvorrichtung (110) und eine zweite Halbleitervorrichtung als die zweite Datenverarbeitungsvorrichtung (120) umfasst, wobei
die erste Halbleitervorrichtung eine erste Verarbeitungseinheit umfasst, die konfiguriert ist, um die erste Verarbeitung auszuführen, und
die zweite Halbleitervorrichtung dazu geeignet ist, die erste Verarbeitung zu migrieren, und umfasst:
eine Snooping-Einheit (230), die konfiguriert ist, um die zur ersten Halbleitervorrichtung eingegebenen Eingangsdaten einem Snooping zu unterziehen, und
eine zweite Verarbeitungseinheit, die konfiguriert ist, um die erste Verarbeitung auszuführen.

15. Datenverarbeitungsverfahren in einem Datenverarbeitungssystem, das eine erste Datenverarbeitungsvorrichtung (110) und eine zweite Datenverarbeitungsvorrichtung (120) umfasst, wobei
die erste Datenverarbeitungsvorrichtung (110) eine erste Verarbeitung an von einer Datenleitung (101b) erlangten Eingangsdaten in einem Intervall gemäß einer Abtastrate ausführt; und
die zweite Datenverarbeitungsvorrichtung (120) die erste Verarbeitung durch Snooping der zur ersten Datenverarbeitungsvorrichtung (110) eingegebenen Eingangsdaten migriert und die erste Verarbeitung ausführt, wobei
die zweite Datenverarbeitungsvorrichtung (120), beim Snooping, die Datenleitung (101b) in einem Intervall gemäß der Abtastrate überwacht, um die Eingangsdaten zu erlangen, die dieselben wie diejenigen sind, die die erste Datenverarbeitungsvorrichtung (110) erlangt hat.

## Revendications

1. Un système de traitement de données comprenant :
un premier appareil (110) de traitement de données configuré pour exécuter un premier traitement sur des données d'entrée acquises à partir d'une ligne de données (101b) sur un intervalle conforme à une fréquence d'échantillonnage ; et
un deuxième appareil (120) de traitement de données configuré pour faire migrer le premier traitement depuis le premier appareil (110) de traitement de données et exécuter le premier traitement,
le deuxième appareil (120) de traitement de données étant adapté pour faire migrer le premier traitement en espionnant les données d'entrée entrées dans le premier appareil (110) de traitement de données, et
lorsqu'il espionne, le deuxième appareil (120) de traitement de données étant adapté pour surveiller la ligne de données (101b) sur l'intervalle selon la fréquence d'échantillonnage, pour acquérir les données d'entrée qui sont les mêmes que celles que le premier appareil (110) de traitement de données a acquises.

2. Le système de traitement de données selon la revendication 1, dans lequel la capacité de traitement et la consommation d'énergie du premier appareil (110) de traitement de données sont différentes de celles du deuxième appareil (120) de traitement de données.

3. Le système de traitement de données selon la revendication 2, dans lequel
la capacité de traitement et la consommation d'énergie du deuxième appareil (120) de traitement de données sont supérieures à celles du premier appareil (110) de traitement de données, et
lorsqu'une capacité de traitement supérieure à celle du premier appareil (110) de traitement de données est requise, le deuxième appareil (120) de traitement de données est configuré pour faire migrer le premier traitement.

4. Le système de traitement de données selon la revendication 3, dans lequel
lorsqu'une fréquence d'échantillonnage supérieure à une fréquence d'échantillonnage prédéterminée est requise en fonction des données d'entrée, le deuxième appareil (120) de traitement de données est configuré pour faire migrer le premier traitement.

5. Le système de traitement de données selon la revendication 3, dans lequel, lorsque le nombre d'éléments de données d'entrée que le premier traitement requiert a augmenté, le deuxième appareil (120) de traitement de données est configuré pour faire migrer le premier traitement.

6. Le système de traitement de données selon la revendication 3, dans lequel, lorsque la charge du premier appareil (110) de traitement de données a augmenté, le deuxième appareil (120) de traitement de données est configuré pour faire migrer le premier traitement.

7. Le système de traitement de données selon la revendication 2, dans lequel
la capacité de traitement et la consommation d'énergie du deuxième appareil (120) de traitement de données sont inférieures à celles du premier appareil (110) de traitement de données, et
lorsque le traitement peut être effectué avec une consommation d'énergie inférieure à celle du premier appareil (110) de traitement de données, le deuxième appareil (120) de traitement de données est configuré pour faire migrer le premier traitement.

8. Le système de traitement de données selon la revendication 7, dans lequel
lorsque le traitement peut être effectué à une fréquence d'échantillonnage inférieure à une fréquence d'échantillonnage prédéterminée en fonction des données d'entrée, le deuxième appareil (120) de traitement de données est configuré pour faire migrer le premier traitement.

9. Le système de traitement de données selon la revendication 7, dans lequel, lorsque le nombre d'éléments de données d'entrée que le premier traitement requiert a été réduit, le deuxième appareil (120) de traitement de données est configuré pour faire migrer le premier traitement.

10. Le système de traitement de données selon la revendication 7, dans lequel, lorsque la charge du premier appareil (110) de traitement de données est réduite, le deuxième appareil (120) de traitement de données est configuré pour faire migrer le premier traitement.

11. Le système de traitement de données selon la revendication 1, dans lequel
le premier appareil (110) de traitement de données est configuré pour exécuter une pluralité des premiers traitements, et
le deuxième appareil (120) de traitement de données est configuré pour faire migrer un traitement sélectionné parmi la pluralité de premiers traitements à partir du premier appareil (110) de traitement de données.

12. Le système de traitement de données selon la revendication 1, dans lequel les données d'entrée sont configurées pour détecter des données entrées à partir d'un capteur (130).

13. Le système de traitement de données selon la revendication 12, dans lequel
les premier et deuxième appareils (110, 120) de traitement de données sont tous deux connectés au capteur (130), et
le deuxième appareil (120) de traitement de données est configuré pour espionner les données de détection que le premier appareil (110) de traitement de données acquiert en provenance du capteur (130).

14. Le système de traitement de données selon la revendication 1, comprenant un premier dispositif à semi-conducteur en tant que premier appareil (110) de traitement de données et un deuxième dispositif à semi-conducteur en tant que deuxième appareil (120) de traitement de données, dans lequel
le premier dispositif à semi-conducteur comprend une première unité de traitement configurée pour exécuter le premier traitement, et
le deuxième dispositif à semi-conducteur est adapté pour faire migrer le premier traitement et comprend :
une unité d'espionnage (230) configurée pour espionner les données d'entrée entrées dans le premier dispositif à semi-conducteur, et
une deuxième unité de traitement configurée pour exécuter le premier traitement.

15. Un procédé de traitement de données dans un système de traitement de données comprenant un premier appareil (110) de traitement de données et un deuxième appareil (120) de traitement de données, dans lequel
le premier appareil (110) de traitement de données exécute un premier traitement sur des données d'entrée acquises à partir d'une ligne de données (101b) sur un intervalle conforme à une fréquence d'échantillonnage, et
le deuxième appareil (120) de traitement de données fait migrer le premier traitement en espionnant les données d'entrée entrées dans le premier appareil (110) de traitement de données, et exécute le premier traitement ;
lors de l'espionnage, le deuxième appareil (120) de traitement de données surveille la ligne de données (101b) sur l'intervalle selon le taux d'échantillonnage, pour acquérir les données d'entrée qui sont les mêmes que celles que le premier appareil (110) de traitement de données a acquises.
